# FASCICULE DE BREVET EUROPEEN

(11) **EP 3 709 102 B1**
(45) Date de publication et mention de la délivrance du brevet: **10.07.2024**
(21) Numéro de dépôt: 19162936.9
(22) Date de dépôt: 14.03.2019
(51) Int. Cl.: G04B 19/12, G04D 3/00, B44C 1/22, B44C 3/02

(54) **COMPOSANT D'HORLOGERIE OU DE BIJOUTERIE A BASE CERAMIQUE ET A DECOR STRUCTURE**
KOMPONENTE EINES UHRWERKS ODER SCHMUCKSTÜCKS AUF KERAMIKBASIS UND MIT EINER DEKORSTRUKTUR
TIMEPIECE COMPONENT OR JEWELLERY ITEM WITH CERAMIC BASE AND STRUCTURED DECORATION

(43) Date de publication de la demande: 16.09.2020
(73) Titulaire: Omega SA, 2502 Bienne (CH)
(72) Inventeur: JEANRENAUD, Frédéric, 2300 La Chaux-de-Fonds (CH); KISSLING, Gregory, 2520 La Neuveville (CH)
(74) Mandataire: ICB SA

(56) Documents cités:
- EP-A1- 3 067 220
- EP-A1- 3 181 006
- EP-A1- 3 339 980
- CH-A1- 713 871

## Description

### Domaine de l'invention

L'invention concerne un procédé de fabrication d'un composant d'horlogerie ou de bijouterie à base céramique et à décor structuré.

L'invention concerne encore une montre comportant un élément d'habillage ou/et un cadran réalisé par ce procédé.

L'invention concerne le domaine des composants d'habillage ou d'affichage pour l'horlogerie, et le domaine de la bijouterie.

### Arrière-plan de l'invention

Pour la fabrication de composants décorés, il est difficile de réaliser correctement des effets optiques, surtout quand le décor est apposé ton sur ton, et la structuration mécanique d'un décor modifie la diffraction lumineuse et l'aspect du décor.

Le document EP3067220 au nom de ROLEX décrit un procédé de décoration d'un élément horloger, comprenant les étapes de gravage profond d'une surface à décorer de l'élément horloger par un laser femtoseconde, et de structuration de surface de la surface à décorer de l'élément horloger, ces deux décorations étant au moins partiellement superposées l'une à l'autre.

Le document CH713871 au nom de RICHEMONT décrit un composant pour pièce d'horlogerie présentant une pluralité d'éléments graphiques, et son procédé de fabrication, le composant comprenant un substrat dont au moins une portion est recouverte d'un revêtement comprenant une pluralité de couches, incluant une couche externe et au moins une couche intermédiaire formée entre le substrat et la couche externe, la couche intermédiaire ayant un aspect différent de celui de la couche externe; le revêtement comprenant au moins une première ouverture définissant un premier élément graphique, la première ouverture ayant une première profondeur laissant apparaître la couche intermédiaire; et une seconde ouverture définissant un deuxième élément graphique, la seconde ouverture ayant une deuxième profondeur différente de la première profondeur; de sorte que le composant comporte au moins deux éléments graphiques ayant un aspect différent l'un de l'autre.

### Résumé de l'invention

L'invention se propose de mettre au point un procédé permettant de créer des effets de décoration et des nuances, voire des effets holographiques, et en particulier pour des décors ton sur ton.

A cet effet, l'invention concerne un procédé de fabrication d'un composant d'horlogerie ou de bijouterie à base céramique et à décor structuré selon la revendication 1.

L'invention concerne encore une montre comportant un élément d'habillage ou/et un cadran réalisé par ce procédé.

L'invention concerne encore un bijou comportant au moins un composant de bijouterie réalisé par le procédé selon l'invention.

Le mode opératoire proposé permet l'obtention de décors de définition élevée sur des substrats, tels que la céramique, mais aussi le saphir, verre, ou similaire.

### Description sommaire des dessins

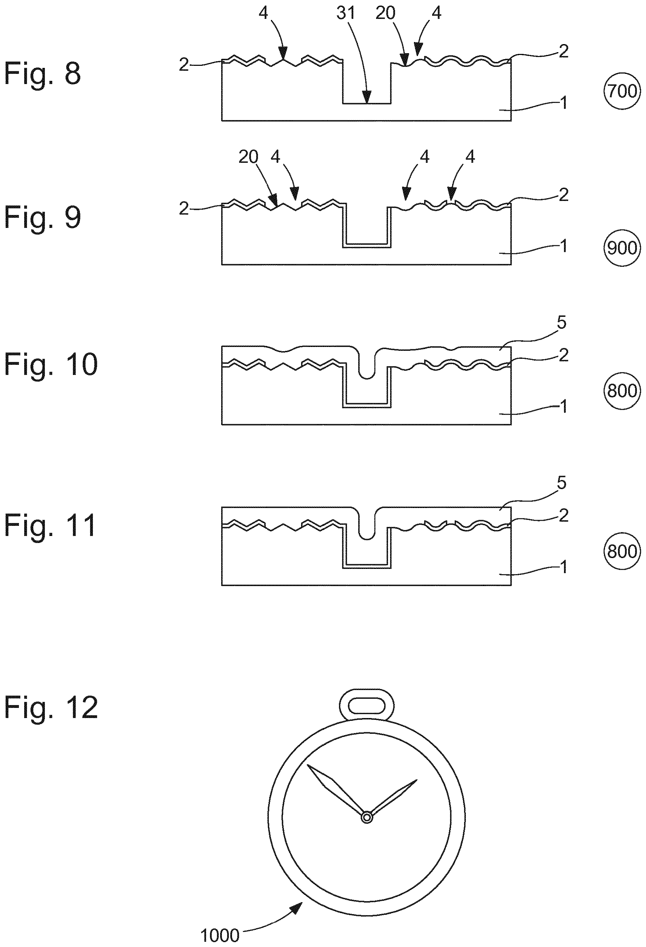

D'autres caractéristiques et avantages de l'invention apparaîtront à la lecture de la description détaillée qui va suivre, en référence aux dessins annexés, où les figures 1 à 11 représentent, de façon schématisée et en coupe, des séquences opératoires d'un procédé selon l'invention :
- la figure 1 représente la réalisation d'une embase ;
- la figure 2 représente un polissage miroir de chaque surface d'aspect de l'embase destinée à être vue par l'utilisateur;
- la figure 3 représente une première opération d'usinage où on effectue un usinage laser et/ou un usinage mécanique à l'outil diamant et/ou à l'abrasif, pour réaliser une première gravure de structuration fine d'au moins certaines surfaces structurées comportant un relief superficiel s'étendant entre des sommets et des creux;
- la figure 4 représente une première opération de transfert par apposition et collage d'au moins un élément décoratif sur une première surface externe de la première couche;
- la figure 5 représente une première opération de recouvrement dans laquelle on recouvre au moins une partie du relief superficiel d'une première épaisseur d'au moins une première couche d'un premier matériau de traitement décoratif métallique ou/et de traitement décoratif coloré, et qui est suivie, dans la figure 6, par une deuxième opération d'usinage lors de laquelle on effectue une gravure profonde avec un premier décor en creux avec une profondeur supérieure à la première épaisseur, et pénétrant dans l'embase sous la surface d'aspect et sous les creux du relief superficiel;

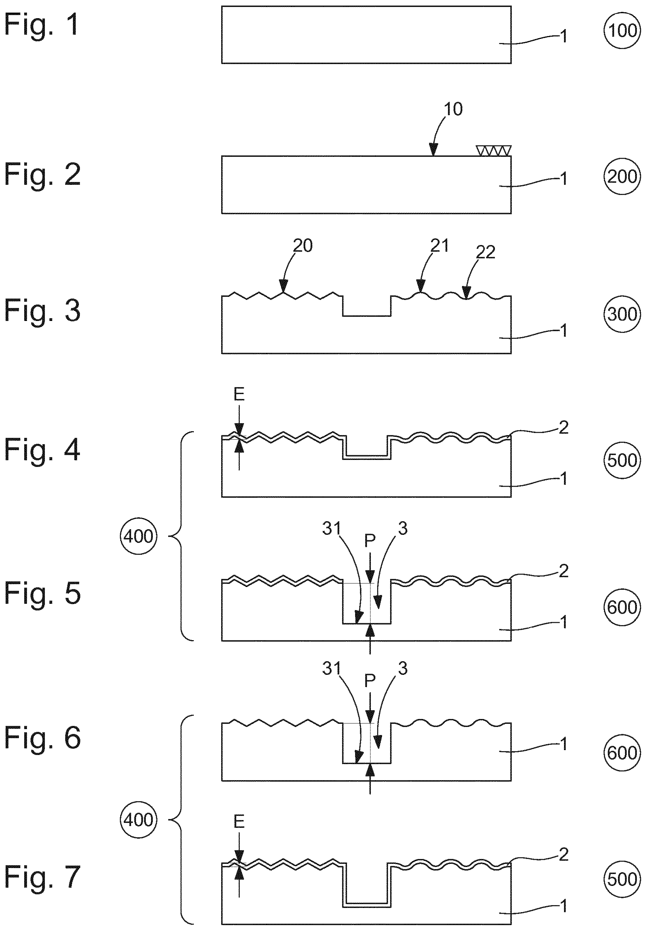

- les figures 6 et 7 représentent les opérations des figures 4 et 5 réalisées dans l'ordre inverse : la figure 6, représente une deuxième opération d'usinage lors de laquelle on effectue une gravure profonde avec un premier décor en creux avec une profondeur supérieure à la première épaisseur, et pénétrant dans l'embase sous la surface d'aspect et sous les creux du relief superficiel, et qui est suivie par l'opération de la figure 7, dans laquelle on recouvre au moins une partie du relief superficiel d'une première épaisseur d'au moins une première couche d'un premier matériau de traitement décoratif métallique ou/et de traitement décoratif coloré ;
- la figure 8 représente une troisième opération d'usinage appliquée à l'ébauche réalisée selon les figures 4 et 5, et selon laquelle on effectue une ablation laser de la première couche au niveau de poches au fond desquelles on révèle le matériau céramique de l'embase ;
- la figure 9 représente, de façon similaire à la figure 8, une troisième opération d'usinage appliquée à l'ébauche réalisée selon les figures 6 et 7 ;
- la figure 10 représente une deuxième opération de recouvrement, appliquée à l'ébauche de la figure 8, et dans laquelle on recouvre la totalité des surfaces visibles du composant par un dépôt d'une deuxième couche d'un deuxième matériau de traitement ;
- la figure 11 représente, de façon similaire à la figure 10, une deuxième opération de recouvrement, appliquée à l'ébauche de la figure 9 ;
- et la figure 12 représente une montre comportant un cadran réalisé et décoré par le procédé selon l'invention.

### Description détaillée des modes de réalisation préférés

L'invention concerne un procédé de fabrication d'un composant d'horlogerie ou de bijouterie à base céramique et à décor structuré, selon lequel on effectue au moins une fois un cycle élémentaire comportant, dans cet ordre, les opérations suivantes :
- dans une opération initiale 100 on réalise une embase 1 en un substrat en matériau céramique;
- dans une première opération de polissage 200 on effectue un polissage miroir de l'embase 1, au moins au niveau de surfaces d'aspect 10 destinées à être vues par l'utilisateur ;
- dans une deuxième opération d'usinage 300 on effectue un usinage laser et/ou un usinage mécanique à l'outil diamant et/ou à l'abrasif, pour réaliser une première gravure de structuration fine d'au moins certaines surfaces structurées comportant un relief superficiel 20 s'étendant entre des sommets 21 et des creux 22, ou un guillochage, ou un soleillage, ou un ciselage, ou une gravure, ou un perlage, ou un colimaçonnage, ou un cerclage, ou un anglage, ou un satinage, ou un étirage, ou un moulurage, ou des côtes de Genève, ou des clous de Paris;
- dans une première opération de préparation 400, on effectue une première opération de recouvrement 500 dans laquelle on recouvre au moins une partie du relief superficiel 20 d'une première épaisseur E d'au moins une première couche 2 d'un premier matériau de traitement décoratif métallique ou/et de traitement décoratif coloré, et on réalise, avant ou après la première opération de recouvrement 500, une deuxième opération d'usinage 600 lors de laquelle on effectue une gravure profonde avec un premier décor en creux 3 avec une profondeur P supérieure à la première épaisseur E, et pénétrant dans l'embase 1 sous la surface d'aspect 10 et sous les creux 22 du relief superficiel;
- dans une troisième opération d'usinage 700, on effectue une ablation laser de la première couche 2 au niveau de poches 4 au fond desquelles on révèle le matériau céramique de l'embase 1. L'usinage laser permet en effet d'enlever une couche superficielle, aussi mince soit-elle, pour revenir à la surface d'un substrat de base, sans altérer celui-ci.

Selon une caractéristique particulière, pendant la première opération de préparation 400, on effectue la première opération de recouvrement 500 avant la deuxième opération d'usinage 600, tel que visible sur les figures 4 et 5.

Selon une autre caractéristique particulière, pendant la première opération de préparation 400, on effectue la deuxième opération d'usinage 600 avant la première opération de recouvrement 500, tel que visible sur les figures 6 et 7.

Selon une caractéristique particulière, lors de la troisième opération d'usinage 700, on poursuit l'usinage d'au moins une poche 4 dans le matériau céramique de l'embase 1.

Selon l'invention, après la troisième opération d'usinage 700, on effectue une deuxième opération de recouvrement 800 dans laquelle on recouvre la totalité des surfaces visibles du composant par un dépôt d'une deuxième couche 5 d'un deuxième matériau de traitement.

Plus particulièrement, après la deuxième opération de recouvrement 800, dans une quatrième opération d'usinage 900, on effectue une ablation laser de la deuxième couche 5 au niveau de poches au fond desquelles on révèle le matériau céramique de l'embase 1 ou/et le premier matériau de traitement de la première couche 2.

Selon une caractéristique particulière, après la quatrième opération d'usinage 700, on réalise une itération par laquelle on effectue à chaque fois une opération de recouvrement dans laquelle on recouvre la totalité des surfaces laissées visibles par l'opération qui précède, et par un dépôt d'une nouvelle couche d'un nouveau matériau de traitement, puis on effectue une ablation laser de la nouvelle couche au niveau de poches au fond desquelles on révèle le matériau céramique de l'embase et/ou le premier matériau de traitement de la première couche ou le matériau de l'une des couches qui sont sous la nouvelle couche.

Selon une caractéristique particulière, après la dernière opération d'usinage, on effectue une dernière opération de recouvrement dans laquelle on recouvre la totalité des surfaces visibles du composant par un dépôt transparent d'un matériau de traitement transparent 5 par voie sèche ou par procédé PVD ou CVD ou ALD ou laquage ou zaponnage.

Selon une caractéristique particulière, après la dernière opération d'usinage, on effectue une dernière opération dans laquelle on effectue un traitement de mise en couleur semi-transparente des surfaces visibles du composant par un dépôt transparent coloré par voie sèche ou par procédé PVD ou CVD ou ALD ou laquage ou zaponnage.

Selon une caractéristique particulière, on choisit la première couche 2 avec le même coloris que le matériau céramique de l'embase.

Selon une caractéristique particulière, on choisit la première couche 2 avec une densité de pigments colorés supérieure à celle du matériau céramique de l'embase.

Selon une caractéristique particulière, on choisit toutes les couches superposées que comporte le composant avec le même coloris que le matériau céramique de l'embase.

Selon une caractéristique particulière, on choisit chacune des couches superposées que comporte le composant avec une densité de pigments colorés supérieure à celle de la couche qu'elle recouvre, et supérieure à celle du matériau céramique de l'embase.

Dans une variante on fait l'inverse, avec une densité de pigments colorés décroissante depuis l'embase jusqu'à la couche la plus externe.

Selon une caractéristique particulière, on choisit le coloris noir ou gris foncé.

Selon une caractéristique particulière, on fabrique le composant d'horlogerie ou de bijouterie pour former un élément d'habillage ou un cadran.

L'invention concerne encore une montre 1000 comportant au moins un composant d'horlogerie ou de bijouterie réalisé par le procédé selon l'invention.

L'invention concerne encore un bijou comportant au moins un composant de bijouterie réalisé par le procédé selon l'invention.

Naturellement, l'invention est avantageuse, non seulement pour des composants de composants d'horlogerie, mais aussi pour des bijoux ou des composants de bijouterie, voire de lunetterie ou d'articles de mode.

En effet, l'invention permet de modifier, et d'enrichir sensiblement l'aspect de composants directement visibles par l'utilisateur, avec des décors innovants, et participe à la promotion de la marque et du produit. Plus particulièrement, l'invention est utilisable pour des marquages d'identification et/ou des marquages anti-contrefaçon.

## Revendications

1. Procédé de fabrication d'un composant d'horlogerie ou de bijouterie à base céramique et à décor structuré, dans lequel on effectue au moins une fois un cycle élémentaire comportant, dans cet ordre, les opérations suivantes :
- dans une opération initiale (100) on réalise une embase (1) en un substrat en matériau céramique;
- dans une première opération de polissage (200) on effectue un polissage miroir de ladite embase (1) au moins au niveau de surfaces d'aspect (10) destinées à être vues par l'utilisateur ;
- dans une deuxième opération d'usinage (300) on effectue un usinage laser et/ou un usinage mécanique à l'outil diamant et/ou à l'abrasif, pour réaliser une première gravure de structuration fine d'au moins certaines surfaces structurées comportant un relief superficiel (20) s'étendant entre des sommets (21) et des creux (22), ou un guillochage, ou un soleillage, ou un ciselage, ou une gravure, ou un perlage, ou un colimaçonnage, ou un cerclage, ou un anglage, ou un satinage, ou un étirage, ou un moulurage, ou des côtes de Genève, ou des clous de Paris;
- dans une première opération de préparation (400), on effectue une première opération de recouvrement (500) dans laquelle on recouvre au moins une partie dudit relief superficiel (20) d'une première épaisseur E d'au moins une première couche (2) d'un premier matériau de traitement décoratif métallique ou/et de traitement décoratif coloré, et on réalise, avant ou après ladite première opération de recouvrement (500), une deuxième opération d'usinage (600) lors de laquelle on effectue une gravure profonde avec un premier décor en creux (3) avec une profondeur P supérieure à ladite première épaisseur E, et pénétrant dans ladite embase (1) sous ladite surface d'aspect (10) et sous lesdits creux (22) dudit relief superficiel;
- dans une troisième opération d'usinage (700), on effectue une ablation laser de ladite première couche (2) au niveau de poches (4) au fond desquelles on révèle le matériau céramique de ladite embase (1) ;
- après ladite troisième opération d'usinage (700), on effectue une deuxième opération de recouvrement (800) dans laquelle on recouvre la totalité des surfaces visibles dudit composant par un dépôt d'une deuxième couche (5) d'un deuxième matériau de traitement.

2. Procédé selon la revendication 1, **caractérisé en ce que**, pendant ladite première opération de préparation (400), on effectue ladite première opération de recouvrement (500) avant ladite deuxième opération d'usinage (600).

3. Procédé selon la revendication 1, **caractérisé en ce que**, pendant ladite première opération de préparation (400), on effectue ladite deuxième opération d'usinage (600) avant ladite première opération de recouvrement (500).

4. Procédé selon l'une des revendications 1 à 3, **caractérisé en ce que**, lors de ladite troisième opération d'usinage (700), on poursuit l'usinage d'au moins une dite poche (4) dans le matériau céramique de ladite embase (1).

5. Procédé selon l'une des revendications 1 à 4, **caractérisé en ce que**, après ladite deuxième opération de recouvrement (800), dans une quatrième opération d'usinage (900), on effectue une ablation laser de ladite deuxième couche (5) au niveau de poches au fond desquelles on révèle le matériau céramique de ladite embase (1) ou le premier matériau de traitement de ladite première couche (2).

6. Procédé selon la revendication 5, **caractérisé en ce que**, après ladite quatrième opération d'usinage (700), on réalise une itération par laquelle on effectue à chaque fois une opération de recouvrement dans laquelle on recouvre la totalité des surfaces laissées visibles par l'opération qui précède, et par un dépôt d'une nouvelle couche d'un nouveau matériau de traitement, puis qu'on effectue une ablation laser de ladite nouvelle couche au niveau de poches au fond desquelles on révèle le matériau céramique de ladite embase ou le premier matériau de traitement de ladite première couche ou le matériau de l'une des couches qui sont sous ladite nouvelle couche.

7. Procédé selon l'une des revendications 1 à 6, **caractérisé en ce que**, après la dernière opération d'usinage, on effectue une dernière opération de recouvrement dans laquelle on recouvre la totalité des surfaces visibles dudit composant par un dépôt transparent d'un matériau de traitement transparent (5) par voie sèche ou par procédé PVD ou CVD ou ALD ou laquage ou zaponnage.

8. Procédé selon l'une des revendications 1 à 6, **caractérisé en ce que**, après la dernière opération d'usinage, on effectue une dernière opération dans laquelle on effectue un traitement de mise en couleur semi-transparente des surfaces visibles dudit composant par un dépôt transparent coloré par voie sèche ou par procédé PVD ou CVD ou ALD ou laquage ou zaponnage.

9. Procédé selon l'une des revendications 1 à 8, **caractérisé en ce qu'**on choisit ladite première couche (2) avec le même coloris que ledit matériau céramique de ladite embase.

10. Procédé selon la revendication 9, **caractérisé en ce qu'**on choisit ladite première couche (2) avec une densité de pigments colorés supérieure à celle dudit matériau céramique de ladite embase.

11. Procédé selon l'une des revendications 1 à 6, **caractérisé en ce qu'**on choisit toutes les couches superposées que comporte ledit composant avec le même coloris que ledit matériau céramique de ladite embase.

12. Procédé selon la revendication 11, **caractérisé en ce qu'**on choisit chacune des couches superposées que comporte ledit composant avec une densité de pigments colorés supérieure à celle de la couche qu'elle recouvre, et supérieure à celle dudit matériau céramique de ladite embase.

13. Procédé selon l'une des revendications 9 à 12, **caractérisé en ce qu'**on choisit ledit coloris noir ou gris foncé.

14. Procédé selon l'une des revendications 1 à 13, **caractérisé en ce qu'**on fabrique ledit composant d'horlogerie ou de bijouterie pour former un élément d'habillage ou un cadran.

15. Montre (1000) comportant au moins un composant d'horlogerie ou de bijouterie réalisé par le procédé selon l'une des revendications 1 à 14.

## Patentansprüche

1. Verfahren zur Herstellung einer Komponente für Uhrmacherei oder Bijouterie auf Keramikbasis und mit strukturierter Verzierung, wobei mindestens einmal ein elementarer Zyklus durchgeführt wird, der in dieser Reihenfolge die folgenden Vorgänge beinhaltet:
- in einem anfänglichen Vorgang (100) wird ein Sockel (1) aus einem Substrat aus keramischem Werkstoff hergestellt;
- in einem ersten Poliervorgang (200) wird ein Spiegelpolieren des Sockels (1) zumindest auf sichtbaren Oberflächen (10), die dazu bestimmt sind, vom Benutzer gesehen zu werden, durchgeführt;
- in einem zweiten Bearbeitungsvorgang (300) wird eine Laserbearbeitung und/oder eine mechanische Bearbeitung mit einem Diamantwerkzeug und/oder einem Schleifmittel durchführt, um eine erste feine Strukturierungsgravur von mindestens einigen strukturierten Oberflächen, die ein oberflächliches Relief (20) beinhalten, das sich zwischen Scheitelpunkten (21) und Hohlräumen (22) erstreckt, oder eine Guillochierung, oder eine Soleillage, oder eine Ziselierung, oder eine Gravur, oder eine Perlung, oder eine Colimagonnage, oder ein Kreisschliff, oder ein Anglieren, oder eine Satinierung, oder ein Ziehen, oder ein Profilieren, oder Cötes de Genève, oder Clous de Paris herzustellen;
- in einem ersten Vorbereitungsvorgang (400) wird ein erster Abdeckungsvorgang (500), bei dem mindestens ein Teil des oberflächlichen Reliefs (20) mit einer ersten Dicke E mit mindestens einer ersten Schicht (2) aus einem ersten dekorativen Metallverzierungs- und/oder Farbverzierungswerkstoff abgedeckt wird, und, vor oder nach dem ersten Abdeckungsvorgang (500) ein zweiter Bearbeitungsvorgang (600) durchgeführt, bei dem eine tiefe Gravur mit einer ersten hohlen Verzierung (3) mit einer Tiefe P erfolgt, die größer als die erste Dicke E ist, und in den Sockel (1) unterhalb der sichtbaren Oberflächen (10) und unterhalb der Hohlräume (22) des oberflächlichen Reliefs eindringt;
- in einem dritten Bearbeitungsvorgang (700) wird eine Laserabtragung der ersten Schicht (2) im Bereich der Taschen (4) durchgeführt, auf deren Boden der keramische Werkstoff des Sockels (1) freigelegt wird;
- nach dem dritten Bearbeitungsvorgang (700) wird ein zweiter Abdeckungsvorgang (800) durchgeführt, bei dem die Gesamtheit der sichtbaren Oberflächen der Komponente durch Abscheiden einer zweiten Schicht (5) aus einem zweiten Behandlungswerkstoff abgedeckt wird.

2. Verfahren nach Anspruch 1, **dadurch gekennzeichnet, dass** während des ersten Vorbereitungsvorgangs (400) der erste Abdeckungsvorgang (500) vor dem zweiten Bearbeitungsvorgang (600) durchgeführt wird.

3. Verfahren nach Anspruch 1, **dadurch gekennzeichnet, dass** während des ersten Vorbereitungsvorgangs (400) der zweite Bearbeitungsvorgang (600) vor dem ersten Abdeckungsvorgang (500) durchgeführt wird.

4. Verfahren nach einem der Ansprüche 1 bis 3, **dadurch gekennzeichnet, dass** während des dritten Bearbeitungsvorgangs (700) die Bearbeitung mindestens einer Tasche (4) aus dem keramischen Werkstoff des Sockels (1) fortgesetzt wird.

5. Verfahren nach einem der Ansprüche 1 bis 4, **dadurch gekennzeichnet, dass** nach dem zweiten Abdeckungsvorgang (800) in einem vierten Bearbeitungsvorgang (900) eine Laserabtragung an der zweiten Schicht (5) im Bereich von Taschen durchgeführt wird, an deren Boden der keramische Werkstoff des Sockels (1) oder der erste Behandlungswerkstoff der ersten Schicht (2) freigelegt wird.

6. Verfahren nach Anspruch 5, **dadurch gekennzeichnet, dass** nach dem vierten Bearbeitungsvorgang (700) eine Iteration durchgeführt wird, bei der jedes Mal ein Abdeckungsvorgang durchgeführt wird, bei dem die Gesamtheit der Oberflächen, die durch den vorhergehenden Vorgang sichtbar geblieben sind, mit einer Abscheidung einer neuen Schicht aus einem neuen Behandlungswerkstoff abgedeckt werden, und dann eine Laserabtragung der neuen Schicht im Bereich von Taschen durchgeführt wird, an deren Boden der Keramikwerkstoff des Sockels oder der erste Behandlungswerkstoff der ersten Schicht oder der Werkstoff einer der Schichten, die sich unter der neuen Schicht befinden, freigelegt wird.

7. Verfahren nach einem der Ansprüche 1 bis 6, **dadurch gekennzeichnet, dass** nach dem letzten Bearbeitungsvorgang ein letzter Abdeckungsvorgang durchgeführt wird, bei dem die Gesamtheit der sichtbaren Oberflächen der Komponente durch eine transparente Abscheidung eines transparenten Behandlungswerkstoffs (5) in einem Trockenverfahren oder in einem PVD- oder CVD- oder ALD-Verfahren oder durch Lackieren oder Zaponieren abgedeckt wird.

8. Verfahren nach einem der Ansprüche 1 bis 6, **dadurch gekennzeichnet, dass** nach dem letzten Bearbeitungsvorgang ein letzter Vorgang durchgeführt wird, bei dem eine halbtransparente Färbebehandlung auf den sichtbaren Oberflächen der Komponente durch farbiges transparentes Abscheiden in einem Trockenverfahren oder in einem PVD- oder CVD- oder ALD-Verfahren oder durch Lackieren oder Zaponieren durchgeführt wird.

9. Verfahren nach einem der Ansprüche 1 bis 8, **dadurch gekennzeichnet, dass** die erste Schicht (2) mit der gleichen Farbe wie der keramische Werkstoff des Sockels gewählt wird.

10. Verfahren nach Anspruch 9, **dadurch gekennzeichnet, dass** die erste Schicht (2) mit einer Farbpigmentdichte gewählt wird, die größer als jene des keramischen Werkstoffs des Sockels ist.

11. Verfahren nach einem der Ansprüche 1 bis 6, **dadurch gekennzeichnet, dass** alle übereinanderliegenden Schichten, die die Komponente beinhaltet, mit der gleichen Farbe gewählt werden, wie der keramische Werkstoff des Sockels.

12. Verfahren nach Anspruch 11, **dadurch gekennzeichnet, dass** jede der übereinanderliegenden Schichten, die die Komponente beinhaltet, mit einer Farbpigmentdichte ausgewählt wird, die größer ist als jene der Schicht, die sie abdeckt, und größer als jene des keramischen Werkstoffs des Sockels.

13. Verfahren nach einem der Ansprüche 9 bis 12, **dadurch gekennzeichnet, dass** die Farbe Schwarz oder Dunkelgrau gewählt wird.

14. Verfahren nach einem der Ansprüche 1 bis 13, **dadurch gekennzeichnet, dass** die Komponente für Uhrmacherei oder Bijouterie gefertigt wird, um ein Ausstattungselement oder ein Zifferblatt zu bilden.

15. Uhr (1000), die mindestens eine Komponente für Uhrmacherei oder Bijouterie beinhaltet, die gemäß dem Verfahren nach einem der Ansprüche 1 bis 14 hergestellt wird.

## Claims

1. Method for fabricating a ceramic-based timepiece or jewellery component with a structured decoration, in which a basic cycle is performed at least once, including, in this order, the following steps:
- in an initial operation (100), making a base (1) from a substrate made of ceramic material;
- in a first polishing operation (200), mirror polishing said base (1), at least on apparent surfaces (10) intended to be seen by the user;
- in a second machining operation (300) performing laser machining and/or mechanical machining with a diamond tool and/or abrasive machining to produce a first fine-pattern etch of at least some structured surfaces having a surface relief (20) extending between peaks (21) and valleys (22), or a Guilloché, or sunray, or chased, or engraved, or perlage, or snailed, or circular grained, or anglage, or satin, or drawn, or concave chamfered finish, or Côtes de Genève, or Clous de Paris;
- in a first preparation operation (400), performing a first coating operation (500) wherein at least one portion of said surface relief (20) is coated with a first thickness E of at least a first layer (2) of a first metal decorative treatment and/or coloured decorative treatment material, and performing, prior to or after said first coating operation (500), a second machining operation (600) during which deep etching is performed to produce a first hollow decoration (3) with a depth P greater than said first thickness E and penetrating said base (1) beneath said apparent surface (10) and beneath said valleys (22) of said surface relief;
- in a third machining operation (700), performing laser ablation on said first layer (2) in pockets (4) at the bottom of which the ceramic material of said base (1) is revealed;
- after said third machining operation (700), a second coating operation (800) is performed wherein all of the visible surfaces of said component are coated with a deposition of a second layer (5) of a second treatment material.

2. Method according to claim 1, **characterized in that**, during said first preparation operation (400), said first coating operation (500) is performed before said second machining operation (600).

3. Method according to claim 1, **characterized in that**, during said first preparation operation (400), said second machining operation (600) is performed before said second coating operation (500).

4. Method according to one of claims 1 to 3, **characterized in that**, during said third machining operation (700), the machining of at least one said pocket (4) is continued in the ceramic material of said base (1).

5. Method according to one of claims 1 to 4, **characterized in that**, after said second coating operation (800), in a fourth machining operation (900), laser ablation is performed on said second layer (5) in pockets at the bottom of which the ceramic material of said base (1), or the first treatment material of said first layer (2), is revealed.

6. Method according to claim 5, **characterized in that**, after said fourth machining operation (700), an iteration is carried out wherein each time a coating operation is performed in which all of the surfaces left visible by the preceding operation are coated with a deposition of another layer of another treatment material, then laser ablation is performed on the new layer in pockets at the bottom of which the ceramic material of said base, or the first treatment material of said first layer, or the material of one of the layers which are underneath said new layer, is revealed.

7. Method according to one of claims 1 to 6, **characterized in that**, after the last machining operation, a last coating operation is performed wherein all of the visible surfaces of said component are coated with a transparent deposition of a transparent treatment material (5) in a dry process or in a PVD or CVD or ALD process, or lacquering or zapon varnish process.

8. Method according to one of claims 1 to 6, **characterized in that**, after the last machining operation, a last operation is performed wherein a semi-transparent colouring treatment is performed on the visible surfaces of said component with a coloured transparent deposition in a dry process or in a PVD or CVD or ALD process or lacquering or zapon varnish process.

9. Method according to one of claims 1 to 8, **characterized in that** said first layer (2) is chosen to have the same colour as said ceramic material of said base.

10. Method according to claim 9, **characterized in that** said first layer (2) is chosen to have a higher density of coloured pigments than that of said ceramic material of said base.

11. Method according to one of claims 1 to 6, **characterized in that** all the superposed layers comprised in said component are chosen to have the same colour as said ceramic material of said base.

12. Method according to claim 11, **characterized in that** each of the superposed layers comprised in said component are chosen to have a higher density of coloured pigments than that of the layer that said superposed layers coat, and higher than that of said ceramic material of said base.

13. Method according to one of claims 9 to 12, **characterized in that** said colour is chosen to be black or dark grey.

14. Method according to one of claims 1 to 13, **characterized in that** said timepiece or jewellery component is made to form an external element or a dial.

15. Watch (1000) comprising at least one component for horology or jewellery made by the method according to one of claims 1 to 14.
